# EUROPEAN PATENT APPLICATION

(11) **EP 4 470 908 A1**
(43) Date of publication of application: **04.12.2024**
(21) Application number: 23176324.4
(22) Date of filing: 31.05.2023
(51) Int. Cl.: B64C 1/18, B64D 11/06

(54) **MOUNTING RAIL**

(71) Applicant: Airbus Operations GmbH, 21129 Hamburg (DE)
(72) Inventor: Poppe, Andreas, 21129 Hamburg (DE); Benthien, Hermann, 21129 Hamburg (DE)

(57) **Abstract**

The present invention relates to mounting rails. In order to provide improved fastening in a floor area, a mounting rail interface (10) for a vehicle is provided that comprises a longitudinal body (12). The body comprises two longitudinal lateral portions (14); and a longitudinal central portion (16) arranged between the two lateral portions. The lateral portions are provided for providing a transition portion to an adjacent surface. The central portion comprises a plurality of openings (18) with a respective circumferential edge flange (20). The openings are provided as longitudinal openings configured to allow a range of different orientations of a connector. The edge flange is provided with a concave curved contour (22) on its rear side (24). The concave curved contour provides an abutting surface for a connector configured to engage with the edge flange of the opening. The curved contour provides an abutting surface over at least an angular range.

## Description

### FIELD OF THE INVENTION

The present invention relates to mounting rails, and relates in particular to a mounting rail interface for a vehicle, to a connector for a mounting rail interface for a vehicle, to a mounting system for an aircraft, to a cabin floor assembly and to a method for mounting a connector to a mounting rail interface for a vehicle.

### BACKGROUND OF THE INVENTION

In aircraft cabin spaces, mounting rails like seat rails are used, for example, for fixing passenger seats to the floor. In order to be able to adjust the seating pattern, i.e. to adjust a seating pitch, longitudinally running seat rails are provided within the cabin floor to be able to mount the seats at various locations along the seat rail. Various examples for seat rails exist as the interface between fuselage structure, i.e. cabin floor construction, and the seats. The seats are provided with fittings for connection with the rail. The seat rail itself is attached to the cabin floor construction. Besides wear due to attaching different types of fittings, the rails are also subject to corrosion and other impacts when being exposed to cabin activity in e.g. commercial aircraft. It has been shown that this may result in at least partially affected connection interfaces leading to undefined load transfer behavior when mounting seats or other equipment.

### SUMMARY OF THE INVENTION

There may thus be a need to provide improved fastening in a floor area.

The object of the present invention is solved by the subject-matter of the independent claims; further embodiments are incorporated in the dependent claims. It should be noted that the following described aspects of the invention apply also for the mounting rail interface for a vehicle, for the connector for a mounting rail interface for a vehicle, for the mounting system for an aircraft, for the cabin floor assembly and for the method for mounting a connector to a mounting rail interface for a vehicle.

According to the present invention, a mounting rail interface for a vehicle is provided. The interface comprises a longitudinal body. The body comprises two longitudinal lateral portions and a longitudinal central portion arranged between the two lateral portions. The lateral portions are provided for providing a transition portion to an adjacent surface. The central portion comprises a plurality of openings with a respective circumferential edge flange. The openings are provided as longitudinal openings configured to allow a range of different orientations of a connector. The edge flange is provided with a concave curved contour on its rear side. The curved contour provides an abutting surface for a connector configured to engage with the edge flange of the opening. The curved contour provides an abutting surface over at least an angular range.

As an advantage, tolerance compensation inside the system is provided by the rotating connection option. This results in optimized load introduction.

As an aspect, load from seats or the like can be transferred not via a punctual, concentrated force transfer or force transmission, but through a linear or even areal force transfer or force transmission.

According to a first option of an example, the concave curved contour is one-dimensionally curved providing an abutting surface over an angular range along a curve. According to a second option of an example, the curved contour is bi-dimensionally curved providing a range for an abutting surface over a section of a curved shell.

According to an example, the edge flange is provided with a concave curved contour on its front side matching with the concave curved contour on the rear side.

According to an example, the central portion comprises a plurality of spherical segments or ellipsoid segments with longitudinal openings as the openings with the circumferential edge flanges.

According to an example, the longitudinal openings are arranged parallel to each other.

According to an example, a longitudinal base is provided configured to be mounted on the structural member. The longitudinal base is having a trough-shaped cross-section. The longitudinal body is mounted on an upper side of the longitudinal base.

According to an example, a lower rail is provided as the structural member, to which the mounting rail interface is mounted. The lower rail comprises an upper flange-like member configured as a support structure for adjacent floor panels. The two lateral portions of the mounting rail interface are configured to cover an edge section of the adjacent floor panels.

According to the present invention, a connector for a mounting rail interface for a vehicle is provided. The connector comprises a body with an inner engaging section, an intermediate section and an outer engaging section. The inner engaging section has a longitudinal form configured for being insertable into longitudinal slot openings of a mounting rail interface. Further, facing the intermediate section, the inner engaging section has a convex curved abutting surface configured for resting against a concave curved contour. The intermediate section has a diameter smaller than the width of the slot openings of the mounting rail interface. Facing the intermediate section, the outer engaging section has a concave curved abutting surface configured for resting against a convex curved contour.

According to the present invention, also a mounting system for an aircraft is provided. The system comprises at least one mounting rail interface according to one of the examples above and at least one connector according to one of the examples above. The connector is inserted into one of the openings of the mounting rail interface.

According to the present invention, a cabin floor assembly is provided. The assembly comprises at least one mounting rail interface according to one of the examples above and a plurality of cabin floor panels. At least a part of the floor panels is arranged adjacent to the mounting rail interfaces with their panel edges clamped by the at least one mounting rail interface.

According to the present invention, also a method for mounting a connector to a mounting rail interface for a vehicle is provided. The method comprises the following steps: providing a mounting rail interface according to one of the preceding examples; providing a connector according to one of the preceding examples; inserting the inner engaging section of the connector into one of the openings; and rotating the inner engaging section and the intermediate section by 90°.

According to an aspect, a connecting system is provided that has a plurality of curved abutting surfaces for a connector having a matching curved abutment surface. The abutting surfaces are provided by cavities provided by a rather thin metal sheet. A slot opening allows to insert connectors and to rotate their inserted portion such that the connector engages with the opening edges.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a perspective view of an example of a mounting rail interface in the context of a support beam.
Fig. 2 shows a cross-section illustrating aspects of the mounting rail interface of Fig. 1.
Fig. 3 schematically illustrates an example of a connector.
Fig. 4a schematically shows a cross-section of an example of a mounting system and Fig. 4b shows the length-section of the mounting system of Fig. 4a.
Fig. 5a shows a cross-section of a mounting rail interface, Fig. 5b shows an inserted connector and Fig. 5c shows a mounted state.
Fig. 6a shows a cross-section of another example of a mounting rail interface, Fig. 6b shows an inserted connector and Fig. 6c shows a mounted state.
Fig. 7a schematically shows an exploded view of an example of a floor assembly in a cross section and Fig. 7b shows the assembled state.
Fig. 8a schematically shows an exploded view of another example of a floor assembly in a cross section and Fig. 8b shows the assembled state.
Fig. 9a shows a cross-section of another mounting rail interface, Fig. 9b shows an inserted connector and Fig. 9c shows a mounted state.
Fig. 10 schematically shows a cross section of an example of a cabin floor assembly.
Fig. 11 schematically shows a cross section of an example of a mounting system.
Fig. 12a schematically shows a perspective view of an example of a mounting system and Fig. 12b shows a cross-section.
Fig. 13a schematically shows a side view of an example of a mounting system, Fig. 13b shows a lengthwise section along the mounting system and Fig. 13c shows some cross-sections.
Fig. 14a, Fig. 14b and Fig. 14c show the side views of Fig. 13a along the rail in an enlarged view.
Fig. 15a, Fig. 15b, Fig. 15c, Fig. 15d and Fig. 15e show the lengthwise sections of Fig. 13b along the rail in an enlarged view.
Fig. 16a, Fig. 16b, Fig. 16c, Fig. 16d and Fig. 16e show the cross-sections of Fig. 13c along the rail in an enlarged view.
Fig. 17 shows basic steps of an example of a method for mounting a connector to a mounting rail interface for a vehicle.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

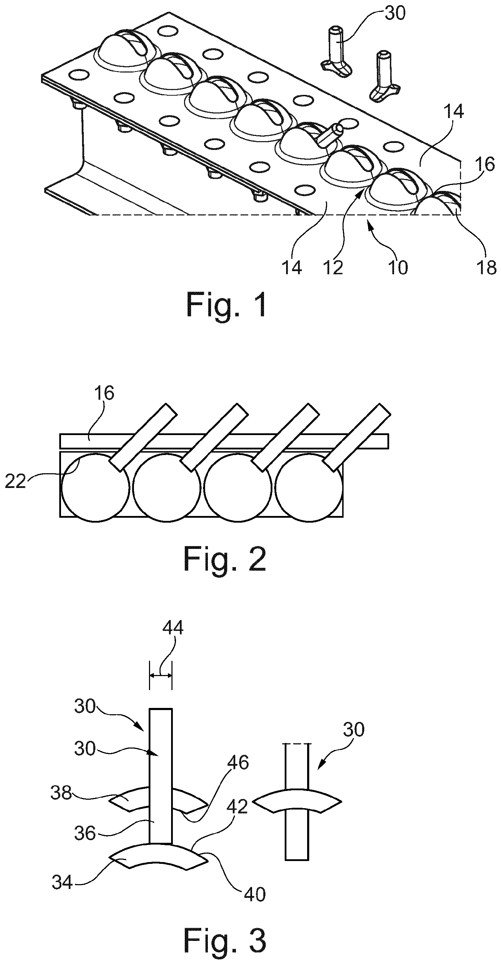

Fig. 1 schematically shows a perspective view of an example of a mounting rail interface 10 in the context of a support beam 11. The mounting rail interface 10 comprises a longitudinal body 12. The body 12 comprises two longitudinal lateral portions 14 and a longitudinal central portion 16 arranged between the two lateral portions 14. The lateral portions 14 are provided for providing a transition portion to an adjacent surface. The central portion 16 comprises a plurality of openings 18 with a respective circumferential edge flange 20. The openings 18 are provided as longitudinal openings 18 configured to allow a range of different orientations of a connector. The edge flange 20 is provided with a concave curved contour 22 on its rear side 24. The concave curved contour 22 provides an abutting surface for a connector configured to engage with the edge flange 20 of the opening. The curved contour provides an abutting surface over at least an angular range.

The concave contour is provided as an ovoid segment or ovoid section.

In an example, the lateral portions 14 are provided for connecting the mounting rail interface 10 to a support structure.

In an example, the openings 18 are arranged with a one-inch pitch (2,54 cm pitch).

A direct load path for all loads is provided. Further, a so-called sticked connection is provided allowing proper, at least linear abutment for the mounting interface for different directions.

In an example (not shown), the concave curved contour 22 is one-dimensionally curved providing an abutting surface over an angular range along a curve.

In the example shown in Fig. 1, the concave curved contour 22 is bi-dimensionally curved providing a range for an abutting surface over a section of a curved shell. In an example, the curved shell is provided as a spherical abutting surface or as a double-curved surface.

Fig. 2 shows a cross-section illustrating aspects of the mounting rail interface 10 of Fig. 1. The contours on the inner side are provided by forming spherical cavities for engaging with connectors.

Fig. 3 schematically illustrates an example of a connector 30 for a mounting rail interface, like the mounting rail interface 10 of Fig. 1, for a vehicle. The connector 30 comprises a body 32 with an inner engaging section 34, an intermediate section 36 and an outer engaging section 38. The inner engaging section 34 has a longitudinal form 40 configured for being insertable into longitudinal slot openings 18 of a mounting rail interface. Facing the intermediate section 36, the inner engaging section 34 has a convex curved abutting surface 42 configured for resting against a concave curved contour. The intermediate section 34 has a diameter 44 smaller than the width of the slot openings 18 of the mounting rail interface. Facing the intermediate section 34, the outer engaging section 38 has a concave curved abutting surface 46 configured for resting against a convex curved contour.

The connector is provided as a rotary joint stud.

In an option, the connector is provided with a biasing towards the insertion position and towards the locking position transverse to the insertion position. For example, a contour is provided at the center part of the inner engaging section which twists the connector to either of the two positions.

A form fit panel attachment without screws is provided.

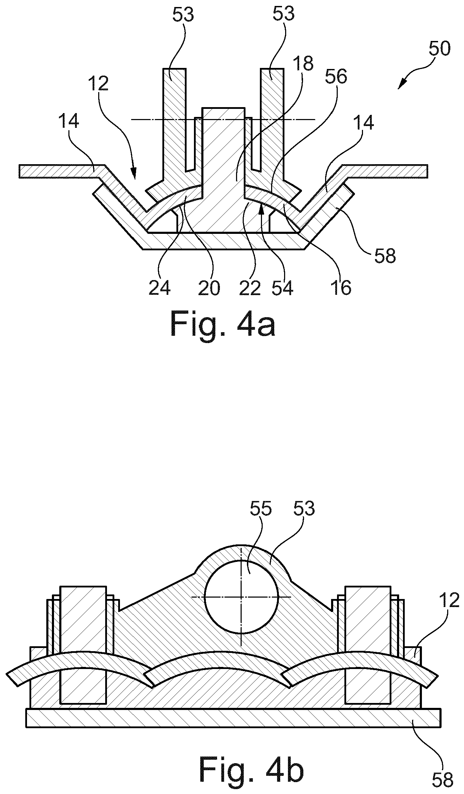

Fig. 4a schematically shows a cross-section of an example of a mounting system 50 for an aircraft, and Fig. 4b shows the length-section of the mounting system 50 of Fig. 4a. The mounting system 50 comprises at least one example of the mounting rail interface 10 according to one of the examples above and below. The mounting system 50 also comprises at least one example of the connector 30 according to one of the examples above and below. The connector 30 is inserted into one of the openings 18 of the mounting rail interface 10.

The mounting system can also be referred to as seat fixation system when at least some of the connectors are provided as seat fittings.

For mounting purposes, one or two or more upwardly protruding brackets 53 can be provided, e.g. with a bore 55 for engaging with bolts to fasten lower ends of seat legs (not shown).

In an example, a rubber seal is provided as a prefixation for the connector.

In an example, a mounting system for a vehicle is provided. The system comprises at least one mounting rail interface 10 according to one of the examples above and at least one connector according to one of the preceding examples. The connector is inserted into one of the openings 18 of the mounting rail interface.

As an option, it is shown that the edge flange 20 is provided with a convex curved contour 54 on its front side 56 matching with the concave curved contour on the rear side.

In an example, the longitudinal body 12 is provided as a sheet-like flat structure with one side forming a rear side for attaching to a support structure and an opposing side facing towards a use space of the vehicle in which space the mounting rail is provided for mounting and attaching purposes.

In an example, the recesses are provided as openings.

In an example, one of the lateral portions 14 is omitted and the central portion 16 is mountable to a base structure by other means.

In another example, one of the lateral portions 14 is omitted and the central portion 16 is provided with stiffening elements such that the interface is mountable via only the one lateral portion.

According to an option, the mounting rail interface 10 is configured as a seat rail for an aircraft cabin. The longitudinal body 12 is provided as a cover configured for mounting to a structural member. As an option, the cover is made from stainless sheet-like material.

The term "seat rail" refers to a longitudinal structure that is provided to be mounted inside a cabin space in the cabin floor in order to serve as a mount for seats. The seat rail may also be used for mounting other parts inside a cabin like partitions, monuments, galleys and lavatories. The seat rail may be a linear or curved structure that allows fixation at a plurality of locations, for example in a certain constant or irregular pattern.

The structural member may be provided having at least one horizontal flange member and at least one vertical web member.

The term "horizontal" refers to the orientation when the rail is in its mounted state within an aircraft. The term horizontal is referring to the arrangement of the floor level or floor plane. The term "vertical" refers to a direction perpendicular to the floor level.

The term "flange member" refers to a mainly horizontally extending segment such as the upper and lower parts in an I-shaped beam cross section.

The term "web member" refers to the mainly vertically extending segment such as the central part of an I-shaped beam cross section.

The term "web segment" refers to a part of the profile in the cross section that extends further in a perpendicular manner to the flanges. The web segment can be a separate part in addition to the vertical web member or can be an extension of the vertical web member.

A smoke and liquid tight rail is provided at least for non-pressurized tightness. In an example, the rail provides a smoke-tight connection, but is still allowing pressure exchange.

In an option, the mounting rail is a rather thin sheet of metal that can be attached to other supporting structures. In an example, the mounting rail can be laid, i.e. mounted, directly onto a floor surface.

In Fig. 4a, the connector is spanning over three spherical base parts, but locked with two pins.

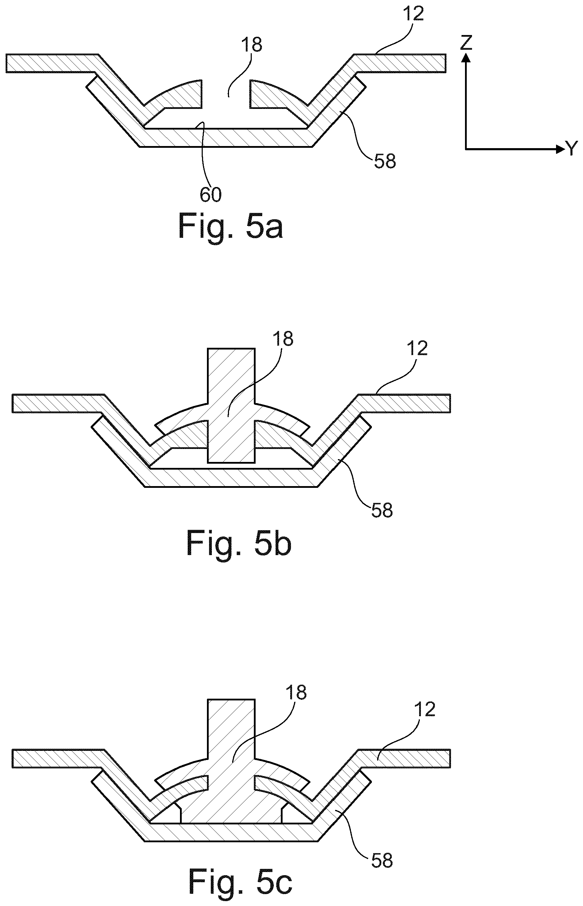

Fig. 5a shows a cross-section of a mounting rail interface, Fig. 5b shows an inserted connector and Fig. 5c shows a mounted state.

Shown as an option in Fig. 5a, a longitudinal base 58 is provided configured to be mounted on the structural member. The longitudinal base 58 is having a trough-shaped cross-section. The longitudinal body 12 is mounted on an upper side 60 of the longitudinal base 58.

In Fig. 5a, the longitudinal body 12 is mounted to the longitudinal base 58. In Fig. 5b, the connector is placed on the longitudinal body 12, but not locked yet. In Fig. 5c, the connector is rotated inside the cavity locking the connector to the rail.

In an example, the longitudinal body 12 and the longitudinal base are made from sheet-like material.

As an effect, a stainless floor interface with a continuous snap & click interface is enabled for cabin interior like seats or monuments.

As an advantage, a stainless floor rail from cheap press formed parts with a continuous interface is provided.

The lower rail can be made from a cheaper extrusion material.

In another example, the longitudinal body 12 is made from sheet-like material and the longitudinal base is provided as an extruded part.

In a further example, the longitudinal body 12 and the longitudinal base are both provided as extruded parts.

In a still further example, the longitudinal body 12 and the longitudinal base are provided in an integrated manner as a common extruded part.

As an effect, a fluid tight rail is provided, e.g. liquid tight rail and also a gas tight rail is provided, since no holes are provided through the complete construction.

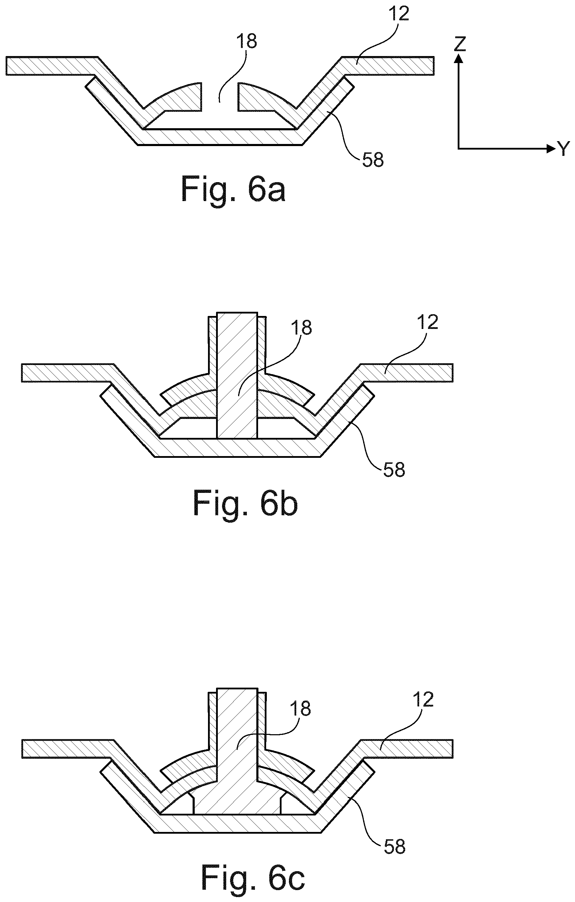

Fig. 6a shows a cross-section of another example of a mounting rail interface, Fig. 6b shows an inserted connector and Fig. 6c shows a mounted state. Compared to Fig. 5a, 5b and 5c, a double stud concept is indicated.

In Fig. 6a, the longitudinal body 12 is mounted to the longitudinal base 58. In Fig. 6b, the connector with double stud is placed on the longitudinal body 12, but not locked yet. In Fig. 6c, the double stud connector is rotated inside the cavity locking the connector to the rail.

In an example, a lower rail 62 is provided as the structural member, to which the mounting rail interface 10 is mounted. The lower rail comprises an upper flange-like member 64 configured as a support structure for adjacent floor panels. The two lateral portions 14 of the mounting rail interface 10 are configured to cover an edge section of the adjacent floor panels.

In an example, the cover is mounted to an upper horizontal flange or web member of the structural member.

In an example, the lower rail is a crossbeam member of a cabin floor construction.

The term "crossbeam" refers to a constructive member spanning from one support on a support structure to another support on the support structure. The crossbeams serve for transferring load from the floor panels, e.g. their own weight plus the use weight from passengers, luggage, trolleys and the like. The crossbeams are part of the floor construction. In some examples, the crossbeams are not part of the primary structure of an aircraft, i.e. the structure that is considered essential for the aircraft and that must not be changed or altered during use of the aircraft. In some examples, the crossbeams are part of the primary structure of an aircraft.

The term "structural" refers to being effective in load transfer that stems from the use of the aircraft and that is more than just carrying their own weight.

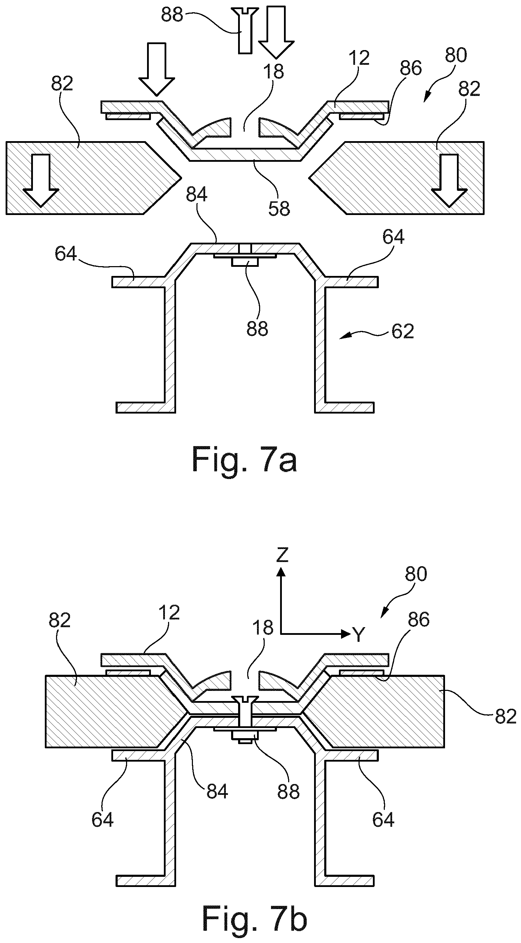

Fig. 7a schematically shows an exploded view of an example of a cabin floor assembly 80 in a cross section and Fig. 7b shows the assembled state. The exploded view illustrates the way the components are applied to form the floor assembly.

In an example, shown in Fig. 7a and Fig. 7b, the cabin floor assembly 80 comprises at least one example of the mounting rail interface 10 according to one of the examples above. Further, a plurality of cabin floor panels 82 is provided. At least a part of the floor panels is arranged adjacent to the mounting rail interfaces 10 with their panel edges clamped by the at least one mounting rail interface 10.

In an example, first the cabin floor panels 82 are placed on a lower rail 84 with their panel edges. The longitudinal base 58 is placed on the center part of the lower rail 84. As an option, an anchor nut or other attachment means is provided. Next, the longitudinal body 12 is placed on the longitudinal base 58. As an option, integrated sealant 86 is provided between the lateral flanges and the floor panels. A center screw/nut combination 88 is used for fixing the assembly.

The floor panels can be clamped. In an option, the floor panels are attached by gluing. In a further option, an engagement section is formed on the edges of the lower rail and the panels have engaging structure along their edges such that both can interact and provide a form locking connection.

In an example, also a connector according to one of the examples above is provided.

In an example, a floor assembly for an aircraft cabin is provided that comprises a plurality of cabin floor panels and at least two seat rail interfaces according to the examples above. At least a part of the floor panels is arranged adjacent to the seat rail interfaces with their panel edges attached to a horizontal part of the respective adjacent seat rail interface.

The term "cabin floor panels" refers to structural panels acting as support for the final surface like a carpet or other floor material. The cabin floor panels may be provided as sandwich plates providing stiffness, stability and a lightweight structure.

The term "adjacent" refers to a neighboring arrangement, i.e. directly next to the seat rail.

A sealant can be arranged between rail cover and floor panels.

In an example, the floor panels are cabin floor panels.

In another example, the floor panels are cargo area floor panels.

In an example, the upper edge of the central portion 16 is aligned with an upper surface of the cabin floor panels.

The term "aligned" refers to approximately the same level, e.g. such that the passenger does not stumble.

The term "upper surface" refers to the final floor level when the cabin floor is in use.

The top of the seat rail profile is at maximum height the same level as the floor panels to eliminate the risk of stumbling. In the cases where no fitting is used the free space between the seat rail and the floor panels needs to be closed by filler to ensure liquid tightness as much as possible as it is state of the art today.

In a further example, a passenger seating arrangement for an aircraft is provided. The arrangement comprises a floor assembly according to one of the examples above. The arrangement further comprises a plurality of passenger seats. The passenger seats are mounted to the seat rail interface.

The term "passenger seats" refers to individual seats with individual seat frames as well as to seat arrangements with two or more seats arranged on a common seat frame.

In general the seat rail and the fitting will be modified but the seat in general stays the same / similar.

In a further option, also an aircraft is provided that comprises a fuselage and a cabin arranged within the fuselage. At least a part of the cabin is equipped with a passenger seating arrangement according to the previous example.

In a still further option, also a use of a mounting rail interface 10 or seat rail according to one of the examples above in an aircraft is provided. In another option, also a use of a mounting system according to the example above in an aircraft is provided.

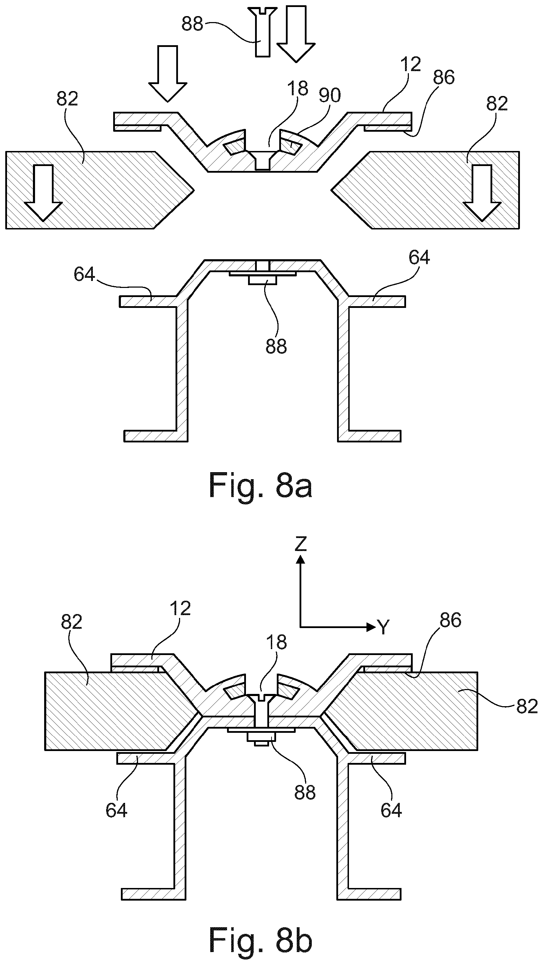

Fig. 8a schematically shows an exploded view of another example of a floor assembly in a cross section and Fig. 8b shows the assembled state. Differing from the example shown in Fig. 7a and Fig. 7b, the longitudinal body 12 is placed on the lower rail.

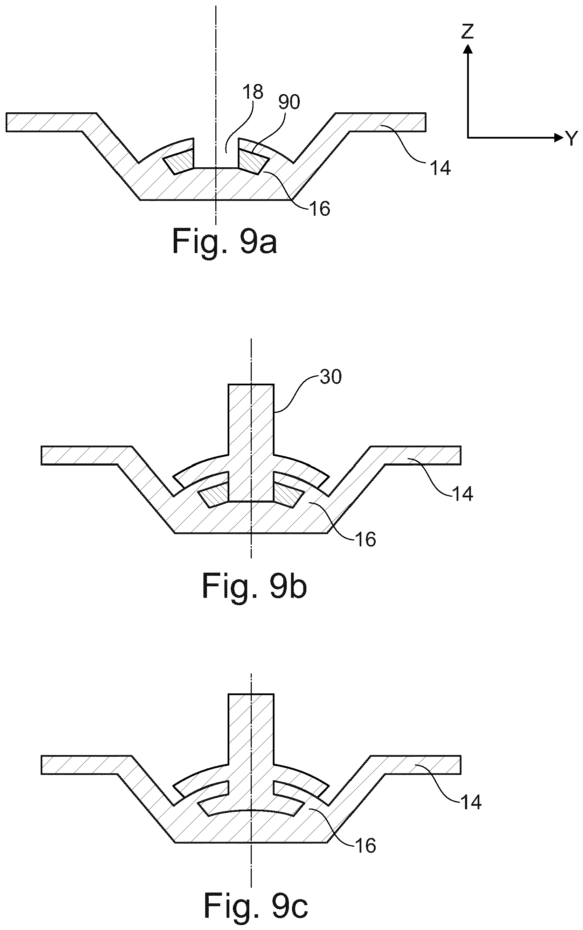

Fig. 9a shows a cross-section of another mounting rail interface, Fig. 9b shows an inserted connector and Fig. 9c shows a mounted state. In Fig. 9a, the longitudinal body 12 is provided. As an option, a mounting compound 90 is provided in the cavities. In Fig. 9b, an example of the connector is inserted and in Fig. 9c, the connectors are rotated locking the connection. Due to the sticky compound, the connection is securely fixed.

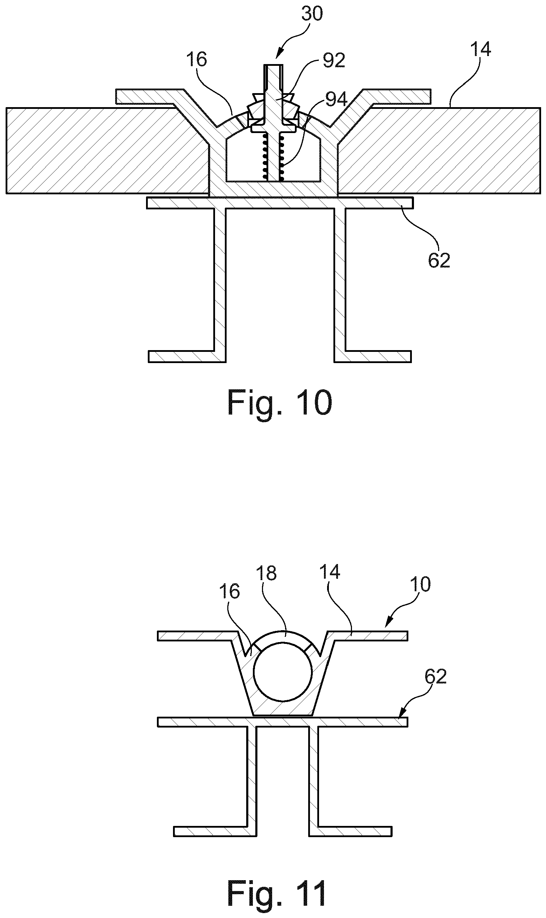

Fig. 10 schematically shows a cross section of an example of a cabin floor assembly. An inserted pin 92 of the connector is provided with a seeping mechanism 94 such that the locking pin is biased into the locked position.

Fig. 11 schematically shows a cross section of an example of a mounting system. The mounting rail interface 10 is arranged on a lower profile.

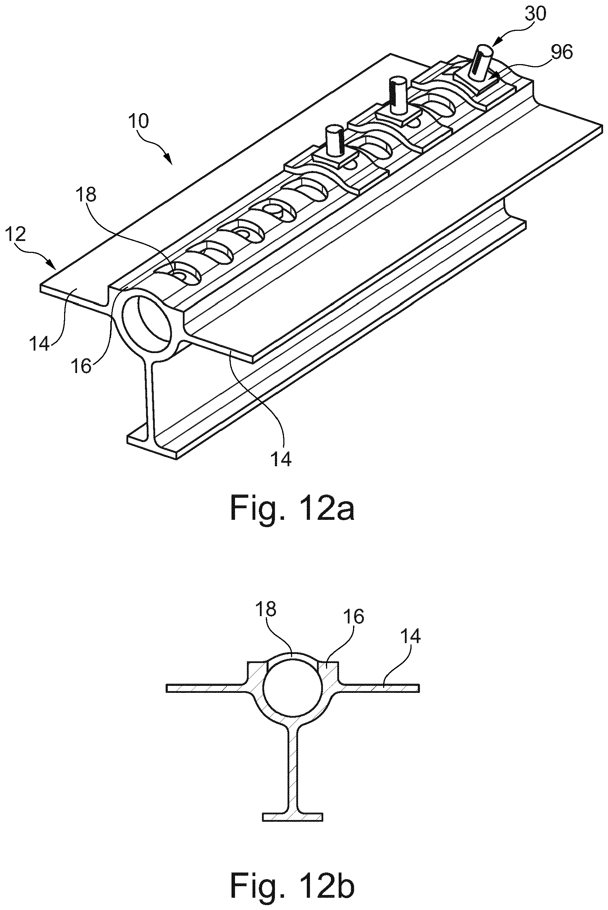

Fig. 12a schematically shows a perspective view of an example of a mounting system and Fig. 12b shows a cross-section of Fig. 12a. The central portion 16 comprises a plurality of spherical segments or ellipsoid segments with longitudinal openings 18' as the openings 18 with the circumferential edge flanges.

It is noted that Fig. 12a shows the mounting rail interface 10 also integrated with a lower rail structure acting as support structure. In another example, the mounting rail interface 10 is arranged separately, e.g. abutting on the top of a support structure.

The longitudinal body 12 is having a curved abutting structure for pivoting along the longitudinal axis. As an example, an inner cylinder is provided with upper openings as slots transverse to the longitudinal axis.

In another option, the longitudinal body 12 is having a plurality of cylindrical hollow spaces to provide the curved abutting surfaces. The cylindrical hollow spaces are arranged with their cylinder axis transverse to longitudinal axis. The openings are elongate in a direction of the longitudinal axis.

In another option, the longitudinal body 12 is having a plurality of spherical hollow spaces to provide the curved abutting surfaces. Depending on the openings, a pivoting of the connector is possible in a variety of directions i.e. angulations.

In an example, a multi-sphere seat rail interface is provided.

As an example, the longitudinal openings 18 are arranged parallel to each other.

In an example, the longitudinal openings 18 are arranged aligned in the longitudinal direction of the mounting rail interface.

In another example, the longitudinal openings 18 are arranged parallel and transverse, e.g. perpendicular to the longitudinal direction of the mounting rail interface.

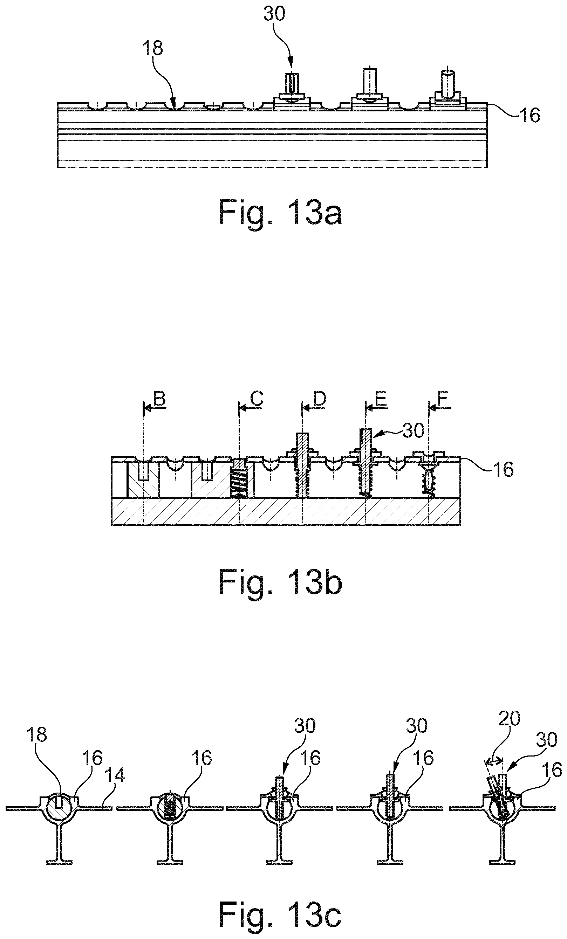

Fig. 13a schematically shows a side view of an example of a mounting system, Fig. 13b shows a lengthwise section along the mounting system and Fig. 13c shows some cross-sections.

In an example, shown in Fig. 13a, 13b and 13c as an option, an intermediate washer 96 is provided between the intermediate section and the outer engaging section, wherein the intermediate washer comprises a convex curved contour facing the outer engaging section.

In an example, the intermediate washer comprises a longitudinal opening slot.

In an example, the washer is made from a more durable material.

In an example, shown in Fig. 13a, 13b and 13c as an option, the outer engaging section is configured as a mounting part provided as a seat fitting. The inner engaging section and the intermediate section are movably hold by the outer engaging section. As an option, the mounting part extends over at least two openings.

In an example, a stainless steel interface for the seats is provided, thus minimizing possible sources for corrosion.

It is provided a form fit locking element and also a form fit seat load introduction.

The term "seat fitting" refers to the bracket or clamp that is used to mount a seat to the floor. The seat fitting connects the seat to the seat rail and ensures the transfer of possibly acting forces when the seat is in use. The seat fitting may provide a pivoting point, i.e. rotating point, for the seat leg. In other examples, the seat fitting provides a rigid and non-pivoting mount.

The term "portion" refers to a segment or part of the seat fitting. The portion can be a separate constructional part or can be a portion of an integrated structure.

The term "bolt" refers to e.g. linear components like screws, rivets and pins.

The term "engage with" refers to a mechanical interaction and e.g. a form-fitting in relation to the forces and load paths to transfer by the mount.

The term "mounting pin" refers to a structure inserted for achieving the proper connection for releasably fixing the seat to the seat rail.

The seat fitting can also be referred to as seat bracket, seat clamp, movable seat mount, releasable seat mount or detachable seat mount.

In an example, the connection portion comprises an eye portion for providing a pivoting connection point for a mounting link of the seat leg. As an example, the eye portion is provided as a plate and the mounting link is provided as a bracket and a common bolt is inserted in the holes of both the bracket and the plate. As another example, the eye portion is provided as a bracket and the mounting link is provided as a plate and a common bolt is inserted in the holes of both the plate and the bracket.

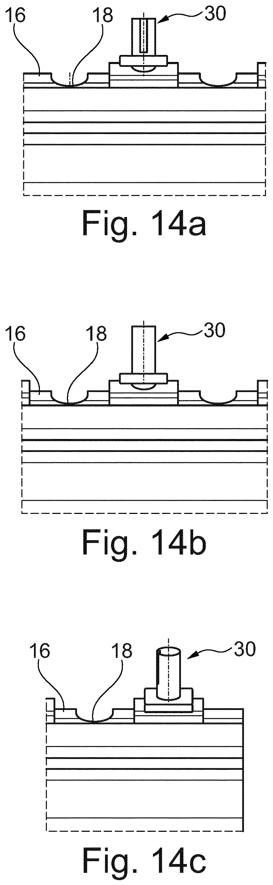

Fig. 14a, Fig. 14b and Fig. 14c show the side views of Fig. 13a along the rail in an enlarged view. Fig. 14a shows the connector 30 inserted, but not rotated yet. Fig. 14b shows the connector 30 rotated such that the curved abutting surfaces engage and the connector 30 is securely hold in axial direction. A pivoting (around the horizontal longitudinal axis of the rail 10) is still possible. Fig. 14c shows the connector 30 pivoted (or tilted) towards the viewer.

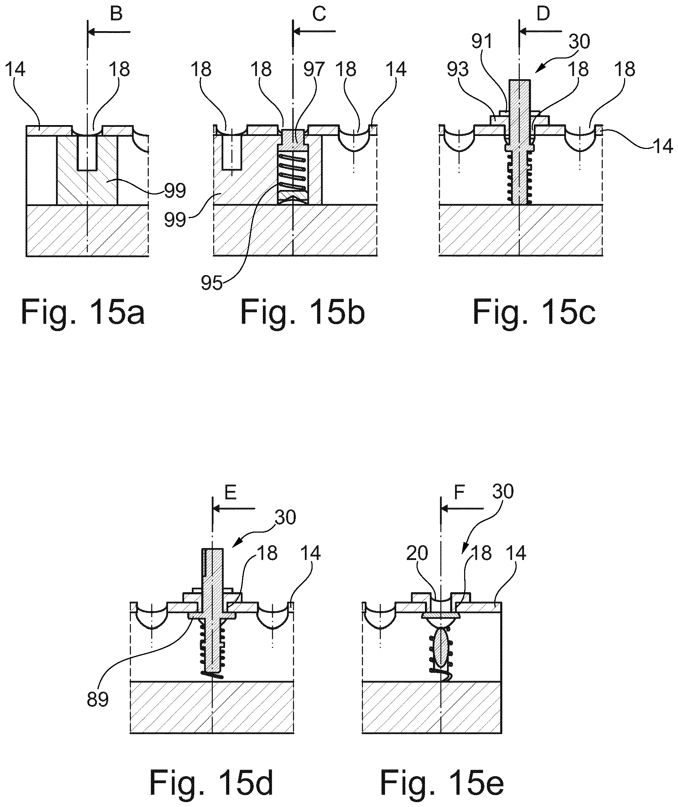

Fig. 15a, Fig. 15b, Fig. 15c, Fig. 15d and Fig. 15e show the lengthwise sections of Fig. 13b along the rail in an enlarged view. Fig. 15a shows a section of the mounting rail interface 10 cutting through the opening 18. An insert 99 is arranged inside the hollow space provided by the longitudinal body 12. Fig. 15b shows a nut 97 translatably hold in the insert. A biasing spring 95 urges the nut upwards. Fig. 15c shows a connector 30 inserted. A primary washer 93 is provided that engages with the opening 18. A further washer 91 is also arranged to provide an adapter to the curved surface of the primary washer 93. Fig. 15d shows the connector 30 rotated such that cantilevering arms 89 engage with the opening's curved edge. Fig. 15e shows the lower part in cutting view, where the connector 30 is pivoted towards the user and is hence not visible in thus cutting view. The pivoting is enabled due to the elongate opening.

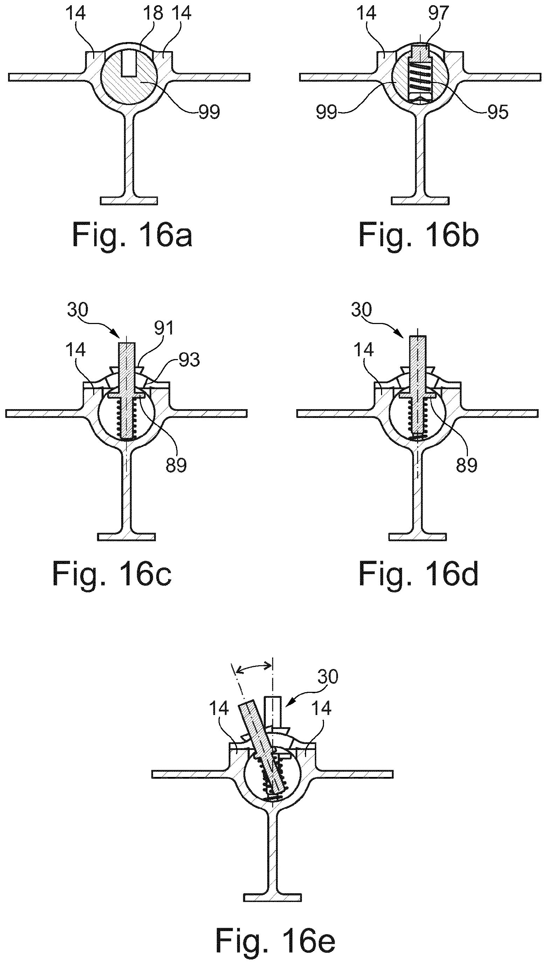

Fig. 16a, Fig. 16b, Fig. 16c, Fig. 16d and Fig. 16e show the cross-sections of Fig. 13c along the rail in an enlarged view. Fig. 16a shows a cross section along line B in Fig. 15a. Fig. 16b shows a cross section along line C in Fig. 15b. Fig. 16c shows a cross section along line D in Fig. 15c. Fig. 16d shows a cross section along line E in Fig. 15d. Fig. 16e shows a cross section along line F in Fig. 15e.

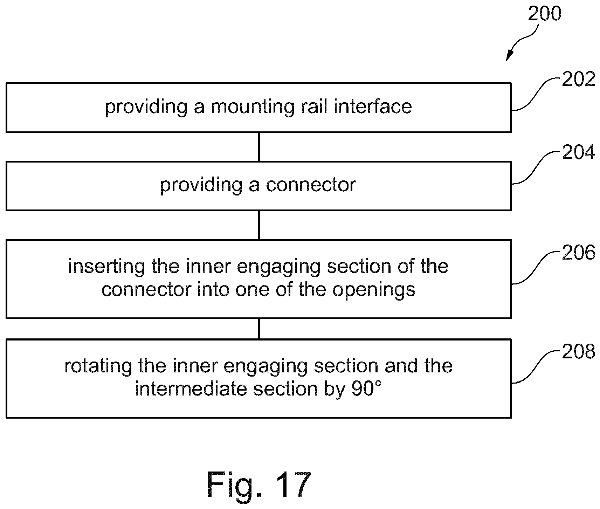

Fig. 17 shows basic steps of an example of a method 200 for mounting a connector to a mounting rail interface 10 for a vehicle. The method 200 comprises the following steps: In a first step 202, a mounting rail interface according to one of the examples above is provided. In a second step 204, a connector according to one of the examples above provided. In a third step 206, the inner engaging section of the connector is inserted into one of the openings. In a fourth step 208, the inner engaging section and the intermediate section are rotated by 90°.

For the connector (or stud) installation, the extruded rail cover is provided, and the connector is provided by sticking the connector in the openings. For an installation of the stud, a 90 degree rotation around the z - axis is performed.

In an option, the rotating of the inner engaging section and the intermediate section is provided by less or more than 90°, e.g. between approximately 30° and 60° or approximately 45° to 90° or between 90° and approximately 135° or approximately 120° to 150°.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A mounting rail interface (10) for a vehicle, the interface comprising a longitudinal body (12), the body comprising:
- two longitudinal lateral portions (14); and
- a longitudinal central portion (16) arranged between the two lateral portions;
wherein the lateral portions are provided for providing a transition portion to an adjacent surface;
wherein the central portion comprises a plurality of openings (18) with a respective circumferential edge flange (20); wherein the openings are provided as longitudinal openings configured to allow a range of different orientations of a connector; and
wherein the edge flange is provided with a concave curved contour (22) on its rear side (24);
wherein the concave curved contour provides an abutting surface for a connector configured to engage with the edge flange of the opening; and
wherein the curved contour provides an abutting surface over at least an angular range.

2. Mounting rail interface according to claim 1, wherein the concave curved contour is:
i) one-dimensionally curved providing an abutting surface over an angular range along a curve; or
ii) bi-dimensionally curved providing a range for an abutting surface over a section of a curved shell.

3. Mounting rail interface according to claim 1 or 2, wherein the edge flange is provided with a convex contour (54) on its front side (56) matching with the concave curved contour on the rear side.

4. Mounting rail interface according to one of claims 1 to 3, wherein the central portion comprises a plurality of spherical segments or ellipsoid segments with longitudinal openings (18') as the openings with the circumferential edge flanges.

5. Mounting rail interface according to one of the preceding claims, wherein the longitudinal openings are arranged parallel to each other.

6. Mounting rail interface according to one of the preceding claims, wherein the mounting rail interface is configured as a seat rail for an aircraft cabin;
wherein the longitudinal body (12) is provided as a cover configured for mounting to a structural member; and
wherein the cover is made from stainless sheet-like material.

7. Mounting rail interface according to one of the preceding claims, wherein a longitudinal base (58) is provided configured to be mounted on the structural member; wherein the longitudinal base is having a trough-shaped cross-section; and
wherein the longitudinal body is mounted on an upper side of the longitudinal base.

8. Mounting rail interface according to one of the preceding claims, wherein a lower rail (62) is provided as the structural member, to which the mounting rail interface is mounted;
wherein the lower rail comprises an upper flange-like member (64) configured as a support structure for adjacent floor panels; and
wherein the two lateral portions of the mounting rail interface are configured to cover an edge section of the adjacent floor panels.

9. A connector (30) for a mounting rail interface for a vehicle, the connector comprising a body (32) with:
- an inner engaging section (34);
- an intermediate section (36); and
- an outer engaging section (38);
wherein the inner engaging section has a longitudinal form (40) configured for being insertable into longitudinal slot openings of a mounting rail interface; and wherein, facing the intermediate section, the inner engaging section has a convex curved abutting surface (42) configured for resting against a concave curved contour;
wherein the intermediate section has a diameter (44) smaller than the width of the slot openings of the mounting rail interface; and
wherein, facing the intermediate section, the outer engaging section has a concave curved abutting surface (46) configured for resting against a convex curved contour.

10. Connector according to claim 9, wherein an intermediate washer (96) is provided between the intermediate section and the outer engaging section, wherein the intermediate washer comprises a convex curved contour facing the outer engaging section.

11. Connector according to claim 9 or 10, wherein the outer engaging section is configured as a mounting part provided as a seat fitting;
wherein the inner engaging section and the intermediate section are movably hold by the outer engaging section; and
wherein, preferably, the mounting part extends over at least two openings.

12. A mounting system (50) for an aircraft, the system comprising:
- at least one mounting rail interface (10) according to one of claims 1 to 8; and
- at least one connector (30) according to one of claims 9 to 11;
wherein the connector is inserted into one of the openings of the mounting rail interface.

13. A cabin floor assembly (80), the assembly comprising:
- at least one mounting rail interface (10) according to one of claims 1 to 8; and
- a plurality of cabin floor panels (82);
wherein at least a part of the floor panels is arranged adjacent to the mounting rail interfaces with their panel edges clamped by the at least one mounting rail interface.

14. A method (200) for mounting a connector to a mounting rail interface for a vehicle, comprising the following steps:
- providing (202) a mounting rail interface according to one of the claims 1 to 8;
- providing (204) a connector according to one of the claims 9 to 11;
- inserting (206) the inner engaging section of the connector into one of the openings; and
- rotating (208) the inner engaging section and the intermediate section by 90°.
